# DEMANDE DE BREVET EUROPEEN

(11) **EP 2 469 254 A1**
(43) Date de publication de la demande: **27.06.2012**
(21) Numéro de dépôt: 11306646.8
(22) Date de dépôt: 13.12.2011
(51) Int. Cl.: G01J 5/22

(54) **Système de mesure et imageur comportant un tel système**

(30) Priorité: 22.12.2010 FR 1061041
(71) Demandeur: Commissariat à l'Énergie Atomique et aux Énergies Alternatives, 75015 Paris (FR)
(72) Inventeur: Dupont, Bertrand, 84400 GARGAS (FR); Tchagaspanian, Michaël, 38330 SAINT ISMIER (FR)
(74) Mandataire: Bonnet, Michel

(57) **Abrégé**

Ce système de mesure comporte un capteur résistif de référence (202) parcouru par un courant de référence (i_{ref}), une branche de référence (216) présentant une résistance de référence (218) et parcourue par le courant de référence (i_{ref}) pour produire une tension de référence entre ses extrémités, au moins un capteur résistif de mesure (222) parcouru par un courant de mesure (iₘₑₛ₁,iₘₑₛ₂) dépendant de la mesure réalisée par le capteur résistif de mesure (222), une branche de miroir de mesure (236*, 236) parcourue par un courant (i'_{ref}), et des moyens (246, 248, 250) de mesure de la différence de courant entre le courant de mesure (iₘₑₛ₁, iₘₑₛ₂) et le courant (i'_{ref}) parcourant la branche de miroir de mesure (236*, 236).

La résistance (238*, 238) de la branche de miroir de mesure (236*, 236) de chaque capteur résistif de mesure (222) est égale à la résistance de référence (218), et le système de mesure comporte en outre des moyens (240, 236*, 238*, 242*, 242, M) d'application, à chaque branche de miroir de mesure (236*, 236), de la tension de référence, ces moyens d'application de la tension de référence étant conçus pour, lorsque la tension de référence est appliquée, être isolés en courant de la branche de miroir de mesure (236*, 236).

## Description

La présente invention concerne les systèmes de mesure utilisant des capteurs résistifs, c'est-à-dire des capteurs présentant une résistance variant en fonction de la grandeur physique qu'ils mesurent.

Elle s'applique en particulier dans le domaine des imageurs, où les capteurs résistifs sont des bolomètres, par exemple des bolomètres infrarouges dont la résistance varie en fonction du rayonnement infrarouge reçu ou bien des bolomètres sensibles à d'autres fréquences de rayonnements électromagnétiques, telles que des fréquences de l'ordre du Térahertz.

Dans la suite de la description et dans les revendications, l'égalité de deux valeurs électriques (tension, courant, résistance...) signifie que ces deux valeurs sont égales aux dispersions technologiques près.

En outre, des termes tels que « haut », « bas », « ligne », « colonne » seront utilisés, à des fins de clarté et en référence à l'orientation des dessins, pour qualifier des éléments. Ils n'ont pas vocation à être limitatifs en particulier vis-à-vis de l'orientation et de l'organisation géométrique réelles de ces éléments.

Un imageur infrarouge fournit une image sous la forme d'une matrice de pixels. En imagerie infrarouge non refroidie, des bolomètres sont utilisés pour capter le flux infrarouge en provenance d'une scène. Il y a généralement un bolomètre par pixel afin de réaliser une image infrarouge de la scène, chaque bolomètre étant intégré dans une cellule bolométrique respective. Ainsi, l'imageur infrarouge comporte une matrice de cellules bolométriques.

Un bolomètre est un capteur résistif dont la résistance varie avec la température et donc avec le flux infrarouge provenant de la scène. Pour lire la valeur de la résistance du bolomètre qui correspond à un flux infrarouge, il est connu d'imposer une tension et de mesurer le courant traversant le bolomètre.

Cependant, la variation de courant liée à une variation de flux infrarouge de 50 Kelvin est de l'ordre du pourcent. Il est donc nécessaire d'éliminer la majeure partie du courant mesuré afin d'avoir un courant à intégrer aussi petit que possible correspondant aux variations de la résistance du bolomètre sensible sous l'effet du flux infrarouge de la scène. Cette élimination de courant est appelée « ébasage ».

Pour cela, il est connu d'utiliser des bolomètres de référence qui ne subissent pas ou peu les effets du flux infrarouge provenant de la scène. Ces bolomètres de référence sont soit « en pied de colonne », c'est-à-dire qu'il y a un bolomètre de référence commun à tous les bolomètres d'une colonne, soit « en tête de ligne », c'est-à-dire qu'il y a un ou plusieurs bolomètres de référence communs à tous les bolomètres d'une ligne.

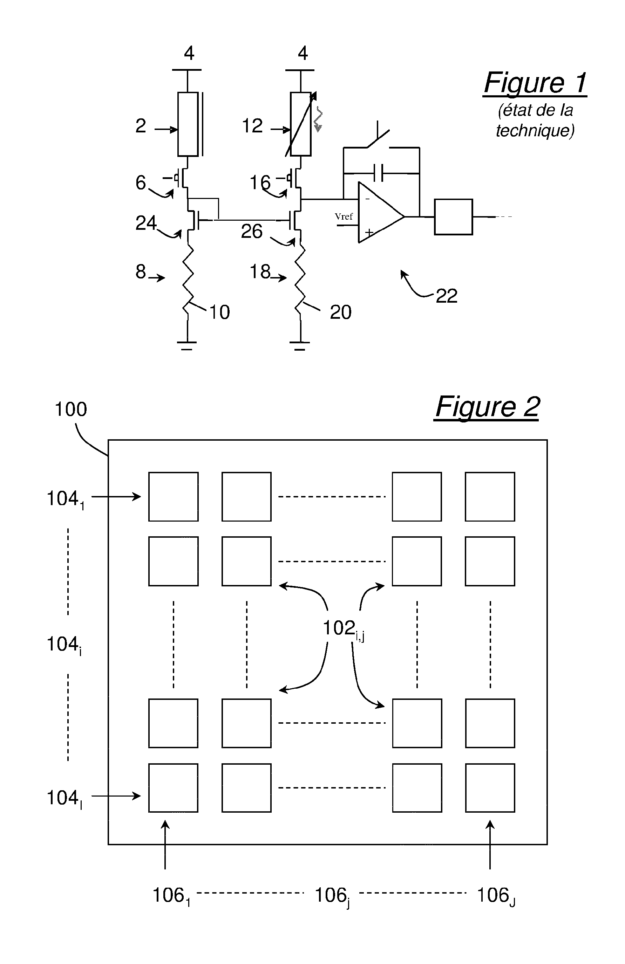

Ainsi, en référence à la figure 1, dans ce second cas, il est connu d'utiliser un imageur infrarouge comportant :
- un capteur résistif tel qu'un bolomètre de référence 2,
- des moyens 4, 6 d'application d'une tension au bolomètre de référence 2, de sorte que ce dernier soit parcouru par un courant de référence,
- une branche de référence 8 présentant une résistance de référence 10 et étant connectée de manière à être parcourue par le courant de référence pour produire une tension de référence entre ses extrémités,
- au moins un capteur résistif tel qu'un bolomètre de mesure 12, et, pour chaque bolomètre de mesure 12 :
   - des moyens 4, 16 d'application d'une tension au bolomètre de mesure, de sorte que ce dernier soit parcouru par un courant de mesure dépendant de l'exposition du bolomètre de mesure à un rayonnement infrarouge,
   - une branche de miroir de mesure 18 présentant une résistance 20 et destinée à être parcourue par un courant égal au courant de référence,
   - des moyens 22 de mesure de la différence de courant entre le courant de mesure et le courant parcourant la branche de miroir de mesure 18.

Dans un tel imageur infrarouge, les moyens d'application d'une tension aux bolomètres de référence et de mesure comportent, pour chaque bolomètre, d'une part, une ligne d'alimentation 4 polarisant une borne du bolomètre et, d'autre part, un transistor 6 dont la source polarise l'autre borne du bolomètre.

En outre, des transistors 24, 26 dans un montage en miroir de courant sont utilisés pour répliquer le courant de référence dans chacune des branches de miroir de mesure de la ligne considérée de la matrice.

Dans un tel montage, un premier transistor 24 est monté en diode ce qui implique qu'il ajuste son potentiel de grille pour laisser passer le courant arrivant à son drain. Dans chaque branche de mesure, la grille d'un second transistor 26, qui n'est pas monté en diode, est connectée à la grille du premier transistor 24 de sorte que cet autre transistor 26 recopie, entre sa source et son drain, le courant traversant le premier transistor 24.

Cette solution offre deux avantages : une réjection importante des bruits d'alimentation et une dérive en température faible étant donné que le circuit de référence et les circuits de mesure sont très proches en termes de composants utilisés.

Cependant, la tendance actuelle est à la baisse des tensions d'alimentation, ce qui impose de réduire également la valeur des résistances bolométriques afin de garder des niveaux de performance acceptables.

Or, l'utilisation de tels bolomètres entraîne une augmentation du courant de référence. Cela se traduit par un potentiel élevé de la grille du transistor 24, et donc également du drain du transistor 6 de polarisation du bolomètre de référence.

Or, ce transistor de polarisation 6 doit fonctionner en régime saturé, ce qui n'est pas possible avec un potentiel de drain trop élevé.

Ainsi, l'imageur infrarouge connu est peu compatible avec la tendance actuelle de baisse des tensions d'alimentation.

En outre, la réduction de la valeur des résistances bolométriques contraint énormément l'électronique de lecture, de sorte que, pour garder une contribution en bruit de cette électronique de lecture négligeable par rapport aux cellules bolométriques, il devient nécessaire d'utiliser des transistors de grande taille présentant une forte capacité entre leur grille et leur substrat. Cela s'ajoute au fait que les formats de matrice ont également tendance à toujours grandir, de sorte que la capacité cumulée des transistors de mesure devient très importante et difficile à charger dans un temps compatible avec les contraintes de cadence vidéo.

Ainsi, l'imageur infrarouge connu est peu compatible avec la tendance actuelle de baisse des tensions d'alimentation et l'augmentation de la taille de la matrice de cellules bolométriques.

Il peut ainsi être souhaité de prévoir un système de mesure qui permette de s'affranchir d'au moins une partie des problèmes et contraintes précités.

L'invention a donc pour objet un système de mesure comportant:
- un capteur résistif de référence,
- des moyens d'application d'une tension au capteur résistif de référence, de sorte que ce dernier soit parcouru par un courant de référence,
- une branche de référence comprenant une résistance de référence et étant reliée au capteur résistif de référence de manière à être parcourue par le courant de référence,
- au moins un capteur résistif de mesure,

et, pour chaque capteur résistif de mesure :
- des moyens d'application d'une tension au capteur résistif de mesure, de sorte que ce dernier soit parcouru par un courant de mesure dépendant de l'exposition du bolomètre de mesure à un rayonnement infrarouge,
- une branche de miroir de mesure comprenant une résistance et destinée à être parcourue par un courant égal au courant de référence,
- un transistor de mesure muni d'une grille et d'une source connectée à une extrémité de la branche de miroir de mesure,
- des moyens de mesure de la différence de courant entre le courant
   de mesure et le courant parcourant la branche de miroir de mesure, le système de mesure comprenant :
- une branche de miroir de référence comportant une résistance,
- un transistor de référence muni d'une grille, d'un drain et d'une source connectée à une extrémité de la branche de miroir de référence,
- un amplificateur opérationnel présentant une entrée positive connectée à une extrémité de la branche de référence, une entrée négative connectée à la source du transistor de référence et une sortie connectée à la grille du transistor de référence,
et la grille de chaque transistor de mesure est connectée à la sortie de l'amplificateur opérationnel.

Ainsi, grâce à l'invention, le système de mesure n'a plus besoin de comporter des transistors dans un montage en miroir de courant de sorte que les problèmes dus au potentiel du drain du transistor de polarisation du capteur résistif de référence et à la charge des transistors de miroir ne se posent plus.

De façon optionnelle également, le système de mesure comporte en outre une masse électrique connectant les autres extrémités des branches de référence et de miroir de référence.

De façon optionnelle également, le système de mesure comporte en outre, pour chaque branche de miroir de mesure, une masse électrique connectée à l'autre extrémité de la branche de miroir de mesure.

De façon optionnelle également :
- la branche de miroir de référence est l'une des branches de miroir de mesure, et
- le transistor de référence est le transistor de mesure relié à la branche de miroir de référence.

De façon optionnelle également:
- la branche de miroir de référence est différente des branches de miroir de mesure, et
- le transistor de référence est différent des transistors de mesure.

De façon optionnelle également :
- les moyens d'application d'une tension au capteur résistif de référence comportent un premier transistor muni d'une source connectée à une borne du capteur résistif de référence et un drain, et
- le système de mesure comporte en outre des moyens de polarisation du drain du premier transistor à un potentiel fixe.

De façon optionnelle également, les moyens de polarisation du drain du premier capteur résistif comportent :
- un second transistor muni d'une grille, d'un drain et d'une source connectée au drain du premier transistor, et
- un amplificateur opérationnel présentant une entrée positive destinée à recevoir le potentiel fixe, une entrée négative connectée à la source du second transistor et une sortie connectée à la grille du second transistor.

De façon optionnelle également, la résistance de la branche de miroir de mesure de chaque capteur résistif de mesure est de valeur égale à celle de la résistance de référence.

De façon optionnelle également, la résistance de la branche de miroir de référence est de valeur égale celle de la résistance de référence.

L'invention a également pour objet un imageur comportant un système de mesure selon l'invention, dans lequel les capteurs résistifs sont des bolomètres.

L'invention sera mieux comprise à l'aide de la description qui va suivre, donnée uniquement à titre d'exemple et faite en se référant aux dessins annexés dans lesquels :
- la figure 1 est schéma électrique d'un imageur infrarouge de l'état de la technique, décrit précédemment,
- la figure 2 est un schéma général d'un imageur infrarouge mettant en oeuvre l'invention,
- la figure 3 est un schéma électrique d'une partie d'une ligne de cellules de l'imageur infrarouge de la figure 2 selon un premier mode de réalisation de l'invention, et
- la figure 4 est un schéma électrique d'une partie d'une ligne de cellules de l'imageur infrarouge de la figure 2 selon un second mode de réalisation de l'invention.

En référence à la figure 2, un imageur infrarouge 100 comporte des cellules bolométriques 102_{¡,j} organisées de façon matricielle en lignes 104ᵢ et colonnes 106ⱼ.

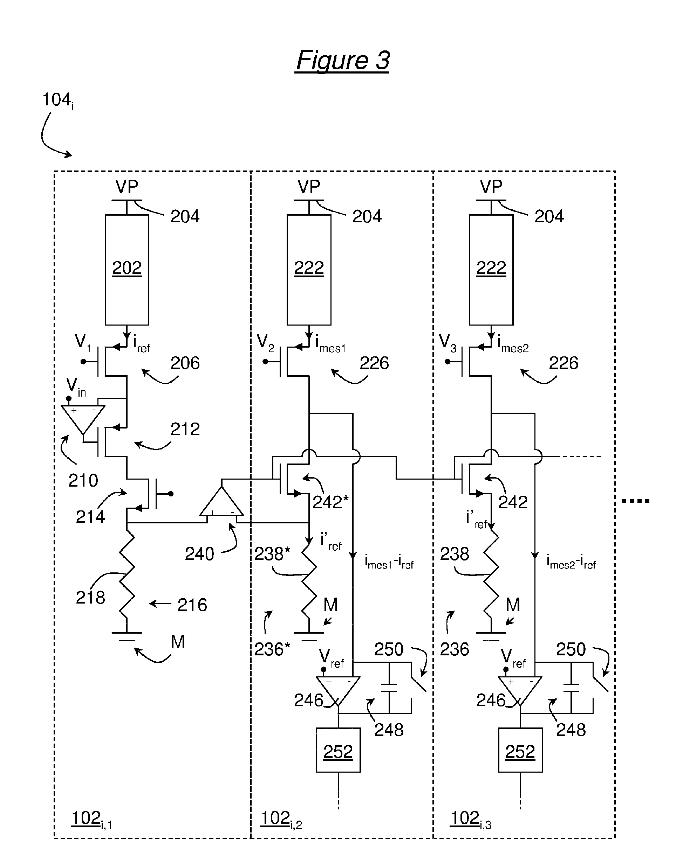

En référence à la figure 3, chaque ligne 104ᵢ comporte une cellule de référence 102_{i,1} suivie de plusieurs cellules de mesure 102_{i,2}, 102_{i,3}.

La cellule de référence 102_{i,1} comporte un bolomètre de référence 202, conçu pour être peu sensible aux rayonnements infrarouges reçus par l'imageur infrarouge, en tout cas moins sensible que les bolomètres de mesure qui seront introduits plus loin. Le bolomètre de référence 202 est par exemple un bolomètre thermalisé ou bien un bolomètre recouvert d'un écran.

La cellule de référence 102_{i,1} comporte en outre des moyens 204, 206 d'application d'une tension au bolomètre de référence 202, de sorte que ce dernier soit parcouru par un courant de référence i_{ref}.

Dans l'exemple décrit, les moyens 204, 206 comportent tout d'abord une ligne d'alimentation 204 connectée à une borne supérieure du bolomètre de référence 202. La ligne d'alimentation 204 est conçue pour polariser cette borne supérieure à un potentiel prédéfini VP, valant par exemple 3.3 ou 5 Volts. Les moyens 204, 206 comportent en outre des moyens de polarisation d'une borne inférieure du bolomètre de référence 202. Dans l'exemple décrit, les moyens de polarisation comportent un transistor P-MOS 206 muni d'une grille, d'un drain et d'une source, cette dernière étant connectée à la borne inférieure du bolomètre de référence 202. Les moyens de polarisation comportent en outre des moyens de polarisation (non représentés) de la grille du transistor P-MOS 206 à un potentiel V₁. Ainsi, il est possible de régler le potentiel de la source du transistor P-MOS 206, et donc de la borne inférieure du bolomètre de référence 202, à partir du potentiel V₁.

Cependant, ce réglage n'est possible que si le potentiel du drain du transistor P-MOS 206 est stabilisé. En effet, dans le cas contraire, le potentiel de source dérive en fonction du potentiel de drain. Ce phénomène est parfois appelé « effet Early ». Ainsi, la cellule de référence 102_{i,1} comporte en outre des moyens 210, 212 de polarisation du drain du transistor P-MOS 206.

Ces moyens de polarisation 210, 212 comportent tout d'abord un amplificateur opérationnel 210 muni d'une sortie, d'une entrée positive et d'une entrée négative, cette dernière étant connectée au drain du transistor P-MOS 206. Les moyens de polarisation 210, 212 comportent par ailleurs un transistor P-MOS 212 muni d'un drain, d'une grille connectée à la sortie de l'amplificateur opérationnel 210 et d'une source connectée à la borne négative de l'amplificateur opérationnel 210. Ainsi, il existe une boucle de rétroaction entre l'entrée négative et la sortie de l'amplificateur opérationnel 210 de sorte que, en fonctionnement, le potentiel de l'entrée négative de l'amplificateur opérationnel 210, et donc de la source du transistor P-MOS 212, devienne rapidement égal au potentiel de la borne positive de l'amplificateur opérationnel 210. En outre, la présence du transistor P-MOS 212 dans la boucle de rétroaction isole le courant circulant entre la source et le drain du transistor P-MOS 212 du courant généré à la sortie de l'amplificateur opérationnel 210.

Dans la suite de la description, un tel montage d'un amplificateur opérationnel et d'un transistor sera appelé « montage polarisateur non perturbateur » car il permet de polariser la source du transistor au potentiel de l'entrée positive de l'amplificateur opérationnel, sans perturber le courant s'écoulant entre la source et le drain du transistor.

Les moyens de polarisation 210, 212 comportent en outre des moyens de polarisation (non représentés) de l'entrée positive de l'amplificateur opérationnel 210 à un potentiel Vᵢₙ, de manière à polariser le drain du P-MOS 206 à ce potentiel Vᵢₙ.

La cellule de référence 102_{i,1} comporte en outre un interrupteur 214 pouvant servir dans un autre mode d'ébasage que celui présenté dans le cadre de la présente invention. Dans l'exemple décrit, cet interrupteur est formé d'un transistor N-MOS 214.

La cellule de référence 102_{i,1} comporte en outre une branche de référence 216 présentant une valeur de résistance R prédéterminée. A cet effet, la branche de référence 216 comporte une résistance 218 de valeur R. La branche de référence 216 est connectée, à une extrémité supérieure, à l'interrupteur 214 et, à une extrémité inférieure, à une masse électrique M de l'imageur infrarouge. Ainsi, la branche de référence 216 est parcourue par le courant de référence fourni par le bolomètre de référence 202, de sorte que l'extrémité supérieure de la branche de référence 216 présente une tension V_{R} égale à R x i_{ref}, fonction du courant de référence i_{ref}, entre ses extrémités.

Chaque cellule de mesure 102_{i,2}, 102_{i,3} comporte un bolomètre de mesure 222 et des moyens 204, 226 d'application d'une tension au bolomètre de mesure 222, de sorte que ce dernier soit parcouru par un courant de mesure iₘₑₛ₁, iₘₑₛ₂. Dans l'exemple décrit, les moyens 204, 226 sont identiques aux moyens 204, 206, et comportent ainsi la ligne d'alimentation 204 et des moyens 226 de polarisation (dans l'exemple décrit, un transistor P-MOS) de la borne inférieure du bolomètre de mesure 222. Ainsi, il est possible de régler le potentiel de la borne inférieure du bolomètre de mesure 222, à partir de potentiels V₂, V₃ appliqués au drain du transistor P-MOS considéré.

Chaque cellule de mesure 102_{i,2}, 102_{i,3} comporte en outre une branche de miroir de mesure 236 (notée 236* pour la première cellule de mesure 102_{i,2}) destinée à être parcourue par un courant i'_{ref} égal au courant de référence i_{ref}, comme cela sera expliqué par la suite. La branche de miroir de mesure 236*, 236 présente la même résistance 238*, 238 que la résistance prédéterminée R.

Pour que le courant de référence i_{ref} parcoure chaque branche de miroir de mesure 236*, 236, l'imageur infrarouge comporte des moyens 240, 236*, 238*, 242*, 242, M d'application, à chaque branche de miroir de mesure 236*, 236, de la tension de référence.

Dans l'exemple décrit, les moyens d'application de la tension de référence 240, 236*, 238*, 242*, 242, M comportent un amplificateur opérationnel 240 et un transistor N-MOS 242* montés en « polarisateur non perturbateur », avec l'entrée positive de l'amplificateur opérationnel 240 connectée à l'extrémité supérieure de la branche de référence 216, le drain du transistor N-MOS 242* connecté au drain du transistor P-MOS 226 de la première cellule de mesure 102_{i,2} et la source du transistor N-MOS 242* connectée à l'extrémité supérieure de la branche de miroir de mesure 236*. Ainsi, l'extrémité supérieure de la branche de miroir de mesure 236* est polarisée au potentiel de l'extrémité supérieure de la branche de référence 216.

Les moyens d'application de la tension de référence 240, 236*, 238*, 242*, 242, M comportent en outre la branche de miroir de mesure 236* qui joue ainsi le rôle d'une branche de miroir de référence permettant la mise en oeuvre de la rétroaction.

Par ailleurs, les moyens d'application de la tension de référence 240, 236*, 238*, 242*, 242, M comportent également la masse électrique M connectée à l'extrémité inférieure de la branche de miroir de mesure 236* et permettant de maintenir cette extrémité au même potentiel que le potentiel de l'extrémité inférieure de la branche de référence 216.

Ainsi, puisque la branche de miroir de mesure 236* présente la même résistance R que la branche de référence 216, un courant de même valeur les parcourt. Ainsi, i_{ref} se retrouve dans la branche de miroir de mesure 236 de la première cellule de mesure 102_{i,2}.

Dans l'exemple décrit, les moyens d'application de la tension de référence 240, 236*, 238*, 242*, 242, M comportent en outre, pour chaque cellule de mesure 102_{i,3} suivant la première, un transistor N-MOS 242 muni d'une grille connectée à la sortie de l'amplificateur opérationnel 240, d'une source connectée à l'extrémité supérieure de la branche de miroir de mesure 236 et d'un drain connecté au drain du transistor P-MOS 226. Le ou les transistors N-MOS 242 sont identiques au transistor N-MOS 242*. Ainsi, comme le même potentiel de grille est appliqué et qu'en outre ils ont le même potentiel de drain V_{ref} imposé par l'amplificateur 246 qui sera décrit plus loin, le même potentiel de source apparaît à l'extrémité supérieure de la branche de miroir de mesure 236. Comme en outre, la branche de miroir de mesure 236 a son extrémité inférieure connectée à la masse électrique M, la tension de référence est appliquée entre les extrémités de la branche de miroir de mesure 236. Enfin, comme la branche de miroir de mesure 236 présente la résistance de référence, elle est parcourue par un courant i'_{ref} égal au courant de référence i_{ref}.

Chaque cellule de mesure 102_{i,2}, 102_{i,3} comporte en outre des moyens de mesure 246, 248, 250 connectés à l'extrémité haute de la branche de miroir de mesure 236 et conçus pour mesurer la différence entre le courant de mesure i_{mes1,} iₘₑₛ₂ et le courant de référence i_{ref} parcourant la branche de miroir de mesure 236.

Dans l'exemple décrit, les moyens de mesure 246, 248, 250 comportent un amplificateur opérationnel 246 monté en intégrateur. Plus précisément l'amplificateur opérationnel 246 est muni d'une entrée positive connectée à un potentiel V_{ref} prédéterminé valant par exemple VP/2, d'une entrée négative connectée à chacun des drains du P-MOS 226 et du N-MOS 242* ou 242 suivant la cellule de mesure considérée. Les moyens de mesure 246, 248, 250 comportent en outre une capacité 248 connectée à la sortie et à l'entrée négative de l'amplificateur opérationnel 246, formant ainsi une boucle de rétroaction capacitive, de sorte que la sortie de l'amplificateur opérationnel 246 présente, en fonctionnement, un potentiel proportionnel à l'intégrale du courant passant dans la capacité 248, c'est-à-dire la différence entre le courant de mesure iₘₑₛ₁, iₘₑₛ₂ et le courant de référence i_{ref}. Les moyens de mesure 246, 248, 250 comportent en outre un interrupteur 250 monté en parallèle de la capacité 248 et permettant de remettre à zéro la mesure en le fermant.

Par ailleurs, on remarquera que le potentiel de l'entrée négative tend, grâce aux propriétés des amplificateurs opérationnels, à être égal au potentiel de l'entrée positive, c'est à dire V_{ref}. Ainsi, le potentiel du drain du transistor P-MOS 226 est stabilisé au potentiel V_{ref}, et il est possible de régler le potentiel de la source du transistor P-MOS 226 à partir du potentiel de grille V₂, V₃.

Chaque cellule de mesure 102_{i,2}, 102_{i,3} comporte en outre un échantillonneur 252 connecté à la sortie des moyens de mesure 246 et conçu pour échantillonner la mesure fournie.

Les échantillonneurs 252 d'une même colonne de cellules de mesure sont tous connectés à un ou plusieurs multiplexeurs de colonne (non représentés, mais symbolisés par les pointillés), pour continuer à traiter et/ou exploiter les signaux de mesure échantillonnés.

Le fonctionnement de l'imageur infrarouge de la figure 1 va à présent être décrit.

L'interrupteur 214 est tout d'abord fermé pour permettre la mise en oeuvre de l'ébasage.

Le potentiel V_{ref} est appliqué aux amplificateurs opérationnels 246 et le potentiel Vᵢₙ est appliqué à l'entrée négative de l'amplificateur opérationnel 210, et ainsi également au drain du transistor P-MOS 206. En fonctionnement normal, le potentiel Vᵢₙ est choisi égal au potentiel V_{ref}. Cependant, pour des phases de test, il peut être avantageux de prendre le potentiel Vᵢₙ différent du potentiel V_{ref}.

Les bolomètres de référence et de mesure sont mis sous tension en appliquant les potentiels V₁, V₂ et V₃. Dans un circuit idéal, les potentiels V₁, V₂ et V₃ devraient être choisis égaux. Cependant, en pratique, il peut être intéressant de pouvoir les fixer les uns indépendamment des autres à des valeurs différentes.

Pour lire une ligne de cellules de mesure, les interrupteurs 250 de cette ligne sont commutés de leur position fermée à leur position ouverte pour initialiser la mesure du courant.

Le courant de référence i_{ref} parcourt la branche de référence 216 et polarise l'extrémité supérieure de cette dernière au potentiel V_{R} = R x i_{ref}.

Grâce à sa boucle de rétroaction, l'amplificateur opérationnel 240 modifie son potentiel de sortie jusqu'à ce que ses entrées positive et négative soient au même potentiel.

Comme les grilles des transistors 242*, 242 de chaque cellule de mesure 102_{i,2}, 102_{i,3} sont connectés à la sortie de l'amplificateur opérationnel 240, le potentiel V_{R} = R x i_{ref} est appliqué à la borne supérieure de chaque branche de miroir de mesure 236*, 236.

Comme chaque branche de miroir de mesure 236*, 236 présente la même résistance R que la branche de référence 216, un courant i_{ref} est généré dans chacune d'elles ce qui permet d'ébaser le courant de mesure des cellules de la colonne en cours de lecture, c'est-à-dire que les moyens de mesure 246, 248, 250 reçoivent le courant de mesure moins le courant de référence.

Cette différence de courant est accumulée dans la capacité 248, pour être ensuite lue par l'échantillonneur 252.

Comme expliqué en introduction, la capacité cumulée entre les grilles et les substrats des transistors de mesure 242*, 242 peut devenir très élevée. Il est ainsi nécessaire de dimensionner l'amplificateur opérationnel 240 en conséquence.

En outre, il a été remarqué que la mesure de la première cellule bolométrique 102_{i,2} pouvait être perturbée par le fait que, au début de sa lecture, il se passe un temps non négligeable avant que l'amplificateur opérationnel 240 ne fournisse le potentiel de sortie permettant aux entrées positive et négative d'être au même potentiel. Pendant tout ce temps, un courant de charge non nul s'écoule vers l'entrée négative de l'amplificateur opérationnel 240, perturbant donc le courant i'_{ref} s'écoulant dans la branche de miroir de mesure 236*. Il peut donc être souhaitable de ne pas utiliser cette branche 236* pour réaliser des mesures.

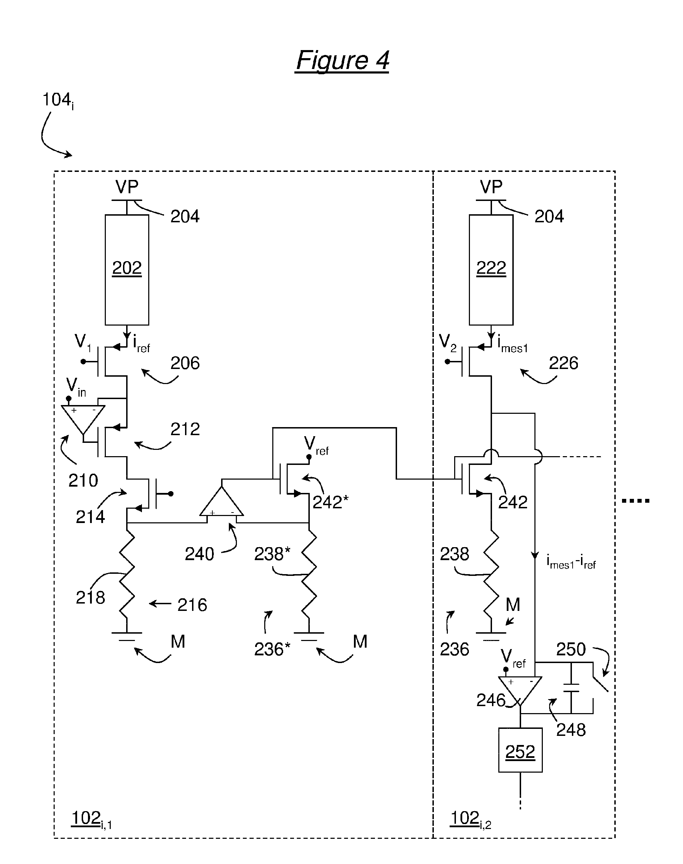

Ainsi, en référence à la figure 4, la cellule de référence intègre la branche de miroir de mesure 236*, qui est à présent une branche de miroir de référence dédiée à la recopie du potentiel de référence.

Dans ce mode de réalisation, le drain du transistor 242* est directement connecté au potentiel V_{ref} et les éléments de mesure de courant 246, 248, 250, 252 sont supprimés.

Il apparaît clairement qu'un imageur infrarouge tel que l'un de ceux décrits précédemment n'utilise pas de transistors dans un montage en miroir de courant.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, le type N ou P des transistors pourrait être inversé pour tous les transistors décrits.

En outre, bien qu'un imageur infrarouge ait été donné comme exemple de mise en oeuvre de l'invention, cette dernière n'est pas limitée aux imageurs infrarouge, mais s'étend aux imageurs dans d'autres domaines de fréquence, par exemple aux fréquences de l'ordre du Térahertz, et même, plus généralement, à tout autre type de système de mesure utilisant des capteurs résistifs, tels que des capteurs CTN (Coefficient de Température négatif) ou des capteurs LDR (de l'Anglais « Light Dependent Resistor », résistance dépendant de la lumière).

Plus généralement, dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système de mesure comportant :
- un capteur résistif de référence (202),
- des moyens (204, 206) d'application d'une tension au capteur résistif de référence (202), de sorte que ce dernier soit parcouru par un courant de référence (i_{ref}),
- une branche de référence (216) comprenant une résistance de référence (218) et étant reliée au capteur résistif de référence (202) de manière à être parcourue par le courant de référence (i_{ref}),
- au moins un capteur résistif de mesure (222),
et, pour chaque capteur résistif de mesure (222) :
- des moyens (204, 226) d'application d'une tension au capteur résistif de mesure (222), de sorte que ce dernier soit parcouru par un courant de mesure (iₘₑₛ₁, iₘₑₛ₂ ; iₘₑₛ₁) dépendant de la mesure réalisée par le capteur résistif de mesure (222),
- une branche de miroir de mesure (236*, 236 ; 236) comprenant une résistance (238*, 238 ; 238) et destinée à être parcourue par un courant (i'_{ref}) égal au courant de référence (i_{ref}),
- un transistor de mesure (242*, 242 ; 242) muni d'une grille et d'une source connectée à une extrémité de la branche de miroir de mesure (236*, 236 ; 236),
- des moyens (246, 248, 250) de mesure de la différence de courant entre le courant de mesure (iₘₑₛ₁, iₘₑₛ₂ ; iₘₑₛ₁) et le courant (i'_{ref}) parcourant la branche de miroir de mesure (236*, 236 ; 236),
le système de mesure étant **caractérisé en ce qu'**il comprend :
- une branche de miroir de référence (236*) comportant une résistance (238*),
- un transistor de référence (242*) muni d'une grille, d'un drain et d'une source connectée à une extrémité de la branche de miroir de référence (236*),
- un amplificateur opérationnel (240) présentant une entrée positive connectée à une extrémité de la branche de référence (216), une entrée négative connectée à la source du transistor de référence (242*) et une sortie connectée à la grille du transistor de référence (242*),
et **en ce que** la grille de chaque transistor de mesure (242*, 242 ; 242) est connectée à la sortie de l'amplificateur opérationnel (240).

2. Système de mesure selon la revendication 1, comportant en outre une masse électrique (M) connectant les autres extrémités des branches de référence (216) et de miroir de référence (236*).

3. Système de mesure selon la revendication 1 ou 2, comportant en outre, pour chaque branche de miroir de mesure (236*, 236 ; 236), une masse électrique (M) connectée à l'autre extrémité de la branche de miroir de mesure (236*, 236 ; 236).

4. Système de mesure selon l'une quelconque des revendications 1 à 3, dans lequel :
- la branche de miroir de référence (236*) est l'une des branches de miroir de mesure (236*, 236), et
- le transistor de référence (242*) est le transistor de mesure relié à la branche de miroir de référence (236*).

5. Système de mesure selon l'une quelconque des revendications 1 à 3, dans lequel :
- la branche de miroir de référence (236*) est différente des branches de miroir de mesure (236), et
- le transistor de référence (242*) est différent des transistors de mesure (242).

6. Système de mesure selon l'une quelconque des revendications 1 à 5,
- dans lequel les moyens (204, 206) d'application d'une tension au capteur résistif de référence (202) comportent un premier transistor (206) muni d'une source connectée à une borne du capteur résistif de référence (202) et un drain, et
- comportant en outre des moyens (210, 212) de polarisation du drain du premier transistor (206) à un potentiel fixe (Vᵢₙ).

7. Système de mesure selon la revendication 6, dans lequel les moyens (210, 212) de polarisation du drain du premier transistor (206) comportent :
- un second transistor (212) muni d'une grille, d'un drain et d'une source connectée au drain du premier transistor (206), et
- un amplificateur opérationnel (210) présentant une entrée positive destinée à recevoir le potentiel fixe (Vᵢₙ), une entrée négative connectée à la source du second transistor (212) et une sortie connectée à la grille du second transistor (212).

8. Système de mesure selon l'une quelconque des revendications 1 à 7, dans lequel la résistance (238*, 238 ; 238) de la branche de miroir de mesure (236*, 236 ; 236) de chaque capteur résistif de mesure (222) est de valeur égale à celle de la résistance de référence (218).

9. Système de mesure selon l'une quelconque des revendications 1 à 8, dans lequel la résistance (238*) de la branche de miroir de référence (236*) est de valeur égale celle de la résistance de référence (218).

10. Imageur comportant un système de mesure selon l'une quelconque des revendications 1 à 9, dans lequel les capteurs résistifs sont des bolomètres.
